(19) Europäisches Patentamt

European Patent Office

Office européen des brevets

(11) **EP 4 201 517 A1**

(12) **EUROPEAN PATENT APPLICATION**

(43) Date of publication:
**28.06.2023 Bulletin 2023/26**

(21) Application number: **21217681.2**

(22) Date of filing: **24.12.2021**

(51) International Patent Classification (IPC):
*B01J 23/40* (2006.01)    *B01J 23/42* (2006.01)
*B01J 23/34* (2006.01)    *B01J 21/06* (2006.01)
*B01D 53/94* (2006.01)    *B01J 21/04* (2006.01)
*B01J 29/08* (2006.01)    *B01J 29/072* (2006.01)
*B01J 29/65* (2006.01)    *B01J 37/02* (2006.01)

(52) Cooperative Patent Classification (CPC):
**B01J 35/0006; B01D 53/945; B01J 21/04;
B01J 23/44; B01J 29/40; B01J 29/7007;
B01J 35/0013; B01J 35/023; B01J 35/04;
B01J 35/10; B01J 35/1014; B01J 35/1019;
B01J 35/1038; B01J 35/1042; B01J 37/0036;**

(Cont.)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **BASF CORPORATION
Florham Park, NJ 07932 (US)**

(72) Inventors:
• HOKE, Jeffrey B.
  NJ, 08830 (US)
• SUNG, Shiang
  NJ, 08830 (US)

(74) Representative: **Altmann Stößel Dick
Patentanwälte PartG mbB
Isartorplatz 1
80331 München (DE)**

(54) **MANGANESE-CONTAINING CATALYTIC ARTICLES, EXHAUST GAS TREATMENT SYSTEMS, AND METHODS**

(57)    Disclosed herein are catalytic articles comprising a first washcoat comprising a first refractory metal oxide support, platinum, palladium, and, optionally, a zeolite, and a second washcoat comprising a second refractory metal oxide support, platinum, and manganese. Also disclosed are exhaust gas treatment systems and methods for treating an exhaust gas stream comprising the same.

<u>100</u>

**FIG. 1**

**(Cont. next page)**

(52) Cooperative Patent Classification (CPC): (Cont.)
**B01J 37/0045; B01J 37/0201; B01J 37/0221;**
**B01J 37/0246; B01J 37/0248;** B01J 21/06;
B01J 23/34; B01J 23/42; B01J 29/08; B01J 29/65

**Description**

Disclosed herein are catalytic articles comprising a first washcoat comprising a first refractory metal oxide support, platinum, palladium, and, optionally, a zeolite, and a second washcoat comprising a second refractory metal oxide support, platinum, and manganese. Also disclosed are exhaust gas treatment systems and methods comprising the same for treating an exhaust gas stream.

Internal combustion engines such as, for example, diesel engines have exhaust gas streams comprising pollutants such as, for example, particulate matter, nitrogen oxides, unburned hydrocarbons, and/or carbon monoxide.

Exhaust gas treatment systems and catalytic articles are exemplary means for pollution abatement from internal combustion engines. For example, some exhaust gas treatment systems comprise a diesel oxidation catalyst upstream of a selective catalytic reduction catalyst. Exemplary diesel oxidation catalysts are useful for abating pollutants such as, for example, unburned hydrocarbons and/or carbon monoxide. Exemplary selective catalytic reduction catalysts are useful for abating, e.g., nitrogen oxides ($NO_x$). Effective abatement of pollutants may, however, be difficult to achieve in practice. For example, there may be tradeoffs between abatement of various pollutants, tradeoffs between abatement of a pollutant across different operating conditions of a combustion engine, and/or tradeoffs between performance of various catalytic articles within an exhaust gas treatment system.

Accordingly, there is a need for improved catalytic articles, exhaust gas treatment systems, and methods for treating an exhaust gas stream. For example, there is a need for catalytic articles, such as diesel oxidation catalysts, with enhanced pollution abatement. Further, there is a need for catalytic articles, such as diesel oxidation catalysts, capable of enhancing the performance of downstream catalytic articles within an exhaust gas treatment system. For example, there is a need for a diesel oxidation catalyst capable of improving the ratio of $NO_2$ to total $NO_x$ in an exhaust stream for enhanced performance of a downstream selective catalytic reduction catalyst, there is a need for a diesel oxidation catalyst capable of heating a downstream soot filter to combust soot trapped therein, and there is a need for a diesel oxidation catalyst capable of enhanced abatement of unburned hydrocarbons and carbon monoxide.

Some embodiments of the present disclosure relate to catalytic articles comprising a first washcoat comprising a first refractory metal oxide support, platinum, palladium, and, optionally, a zeolite, and a second washcoat comprising a second refractory metal oxide support, platinum, and manganese.

In some embodiments, a catalytic article comprises: a substrate having a length and comprising an inlet end and an outlet end, a first zone comprising a first washcoat deposited on at least a portion of the substrate, and a second zone, at least partially downstream of the first zone, comprising a second washcoat deposited on at least a portion of the substrate; wherein: the first zone has a total platinum group metal loading ranging from 1 g/ft$^3$ to 220 g/ft$^3$, and the first washcoat comprises: a first refractory metal oxide support, platinum, palladium, and, optionally, a zeolite; and the second zone has a total platinum group metal loading ranging from 1 g/ft$^3$ to 200 g/ft$^3$, and the second washcoat comprises: a second refractory metal oxide support, an amount of platinum ranging from 2 weight % to 10 weight %, by total weight of the second washcoat, an amount of manganese ranging from 0.5 weight % to 30 weight %, and a weight ratio of platinum to manganese ranging from 1:10 to 20:1.

In some embodiments, the first and second refractory metal oxide supports each independently comprise at least one metal oxide chosen from alumina, silica, titania, ceria, zirconia, and combinations thereof.

In some embodiments, the second washcoat comprises essentially no platinum group metals other than platinum.

In some embodiments, the second washcoat comprises essentially no transition metals other than platinum, manganese, optionally titanium, and optionally zirconium.

In some embodiments, the first and/or second washcoat comprises platinum nanoparticles.

In some embodiments, the first refractory metal oxide support comprises palladium.

In some embodiments, the first washcoat comprises a total platinum group metal content from 0.5 weight % to 10 weight %, by total weight of the first washcoat.

In some embodiments, the second washcoat comprises from 2 weight % to 10 weight % platinum, by total weight of the second washcoat.

In some embodiments, the second washcoat comprises from 0.5 weight % to 10 weight % manganese, by total weight of the second washcoat.

In some embodiments, wherein the first washcoat has a weight ratio of platinum to palladium from 1:1 to 10:1.

In some embodiments, a weight ratio of platinum in the first washcoat to platinum in the second washcoat ranges from 15:1 to 1:5.

Also disclosed are exhaust gas treatment systems comprising a catalytic article disclosed herein.

In some embodiments, an exhaust gas treatment system comprises a catalytic article disclosed herein, a catalyzed soot filter, and a selective catalytic reduction catalyst; wherein the catalyzed soot filter and the selective catalytic reduction catalyst are downstream from the catalytic article.

Also disclosed are methods for treating a diesel engine exhaust gas stream.

In some embodiments, a method for treating a diesel engine exhaust gas stream comprises contacting the exhaust gas stream with a catalytic article disclosed herein.

In some embodiments, a method for treating a diesel engine exhaust gas stream comprises contacting the exhaust gas stream with an exhaust gas treatment system disclosed herein.

## BRIEF DESCRIPTION OF THE DRAWINGS

Fig. 1 depicts an exemplary exhaust gas treatment system consistent with some embodiments of the disclosure.

Fig. 2 depicts an exemplary exhaust gas treatment system consistent with some embodiments of the disclosure.

Fig. 3 depicts $NO_2$ make for some embodiments of the disclosure.

Fig. 4 depicts $NO_2$ make for some embodiments of the disclosure.

Fig. 5 depicts light off results for some embodiments of the disclosure.

Fig. 6 depicts hydrocarbon conversion for some embodiments of the disclosure.

## Definitions:

As used herein, "a" or "an" entity refers to one or more of that entity, e.g., "a compound" refers to one or more compounds or at least one compound unless stated otherwise. As such, the terms "a" (or "an"), "one or more", and "at least one" are used interchangeably herein.

As used herein, the term "material" refers to the elements, constituents, and/or substances of which something is composed or can be made.

As used herein, the term "about" refers to a range of $\pm$ 5% of the stated number. For example, "about 100" means a number ranging from 95 to 105 including, e.g., 95, 100, and 105. Unless otherwise stated, all numbers are assumed to be modified by "about".

As used herein, the term "platinum group metal," abbreviated "PGM," refers to ruthenium, rhodium, palladium, osmium, iridium, platinum, and combinations thereof.

As used herein, a "catalyzed soot filter" comprises a filter for trapping soot particles from an exhaust gas and a catalyst composition for oxidizing entrapped soot particles.

As used herein, the "loading" of a material such as, for example, a washcoat or a metal, on a substrate refers to the dry mass of the material coated on the substrate per unit volume of the substrate. For example, a washcoat loading of 1 $g/in^3$ on a substrate means that the total dry mass of the washcoat per cubic inch of substrate is 1 gram. Further, for example, a platinum group metal loading of 1 $g/ft^3$ on a substrate means that the total mass of platinum group metals per cubic foot of the substrate is 1 gram. The loading of a material may be local to a sub-volume of the substrate. Such loadings are reported as the total dray mass of the material coated on the sub-volume of the substrate per unit volume of the sub-volume of the substrate. For example, a substrate may have a first zone of X cubic inches in volume with a total dry washcoat mass of A g deposited thereon and a second zone of Y cubic inches in volume with a total dry washcoat mass of B g deposited thereon. In this example, the first zone has a washcoat loading of (A/X) $g/in^3$ and the second zone has a washcoat loading of (B/Y) $g/in^3$.

As used herein, "T80 for HC" refers to the temperature required during light-off testing to convert 80% of the hydrocarbons present in the gas stream.

As used herein, "T50 for CO," refers to the temperature required during light-off testing to convert 50% of the carbon monoxide present in the gas stream.

As used herein, the term "diesel oxidation catalyst" refers to a catalyst, comprising a platinum group metal, capable of oxidizing carbon monoxide and hydrocarbons when contacted with exhaust from a diesel engine.

As used herein, the term "$NO_x$" refers to nitrogen oxides and mixtures thereof. Exemplary nitrogen oxides include, but are not limited to, NO, $N_2O$, $NO_2$, and $N_2O_2$.

As used herein, the term "selective catalytic reduction catalyst" refers to a catalyst capable of selectively reducing $NO_x$ to $N_2$ and water, optionally in the presence of a reductant such as $NH_3$.

As used herein, "particle size DX," wherein X is a number ranging from 0 to 100, refers to the particle size at which about X% of the particles have a smaller particle size. For example, "particle size D90" refers to the particle size at which about 90% of the particles have a smaller particle size.

As used herein, the term "washcoat" refers to a coating applied to a substrate.

As used herein, a second entity is "downstream" of a first entity if the two entities are in fluid communication and fluid, such as an exhaust gas, flows from the first entity to the second entity; there may or may not be one or more additional entities in fluid communication between the first and second entity.

As used herein, a first entity is "upstream" of a second entity if the second entity is downstream of the first entity.

As used herein, zeolite framework types are as classified by the Structure Commission of the International Zeolite Association according to the rules of the IUPAC Commission on Zeolite Nomenclature. According to this classification, zeolite framework types are assigned a three letter code and are described in the Atlas of Zeolite Framework Types, 5th edition, Elsevier, London, England (2001 ).

As used herein, a zone on a substrate may or may not at least partially overlap another zone on the substrate.

As used herein, a layer on a substrate may or may not at least partially overlap another layer on the substrate.

**Catalytic Articles:**

In some embodiments, a catalytic article comprises: a substrate having a length and comprising an inlet end, and an outlet end, a first zone comprising a first washcoat deposited on at least a portion of the substrate, and a second zone, at least partially downstream of the first zone, comprising a second washcoat deposited on at least a portion of the substrate; wherein: the first zone has a total platinum group metal loading ranging from 1 g/ft$^3$ to 220 g/ft$^3$; and the first washcoat comprises: a first refractory metal oxide support, platinum, palladium, and, optionally, a zeolite; and the second zone has a total platinum group metal loading ranging from 1 g/ft$^3$ to 200 g/ft$^3$, and the second washcoat comprises: a second refractory metal oxide support, an amount of platinum ranging from 2 weight % to 10 weight %, by total weight of the second washcoat, an amount of manganese ranging from 0.5 weight % to 30 weight %, and a weight ratio of platinum to manganese ranging from 1:10 to 20:1.

In some embodiments, a catalytic article comprises: a substrate having a length and comprising an inlet end, and an outlet end, a first zone comprising a first washcoat deposited on at least a portion of the substrate, and a second zone, at least partially downstream of the first zone, comprising a second washcoat deposited on at least a portion of the substrate; wherein: the first zone has a total platinum group metal loading ranging from 1 g/ft$^3$ to 220 g/ft$^3$; and the first washcoat comprises: a first refractory metal oxide support, platinum, palladium, and, a zeolite; and the second zone has a total platinum group metal loading ranging from 1 g/ft$^3$ to 200 g/ft$^3$, and the second washcoat comprises: a second refractory metal oxide support, an amount of platinum ranging from 2 weight % to 10 weight %, by total weight of the second washcoat, an amount of manganese ranging from 0.5 weight % to 30 weight %, and a weight ratio of platinum to manganese ranging from 1:10 to 20:1.

In some embodiments, the second zone has a total platinum group metal loading ranging from 1 g/ft$^3$ to 200 g/ft$^3$. In some embodiments, the second zone has a total platinum group metal loading ranging from 10 g/ft$^3$ to 150 g/ft$^3$. In some embodiments, the second zone has a total platinum group metal loading ranging from 10 g/ft$^3$ to 50 g/ft$^3$.

In some embodiments, the first zone has a total platinum group metal loading ranging from 20 g/ft$^3$ to 200 g/ft$^3$. In some embodiments, the first zone has a total platinum group metal loading ranging from 20 g/ft$^3$ to 50 g/ft$^3$. In some embodiments, the first zone has a total platinum group metal loading ranging from 80 g/ft$^3$ to 150 g/ft$^3$.

In some embodiments, the first and second refractory metal oxide supports each independently comprise at least one metal oxide chosen from alumina, silica, titania, ceria, zirconia, and combinations thereof.

In some embodiments, the first and second refractory metal oxide supports each independently have a BET surface area ranging from 50 m$^2$/g to 500 m$^2$/g. In some embodiments, the first and second refractory metal oxide supports each independently have a BET surface area ranging from 50 m$^2$/g to 250 m$^2$/g. In some embodiments, the first and second refractory metal oxide supports each independently have a BET surface area ranging from 70 m$^2$/g to 150 m$^2$/g.

In some embodiments, the second washcoat further comprises palladium.

In some embodiments, the second washcoat comprises essentially no platinum group metals other than platinum and palladium. In some embodiments, the second washcoat comprises essentially no platinum group metals other than platinum.

In some embodiments, the second washcoat comprises essentially no transition metals other than platinum, manganese, optionally titanium, and optionally zirconium. In some embodiments, the second washcoat comprises essentially no transition metals other than platinum and manganese. In some embodiments, the second washcoat comprises essentially no transition metals other than platinum, manganese, and titanium. In some embodiments, the second washcoat comprises essentially no transition metals other than platinum, manganese, titanium, and zirconium. In some embodiments, the second washcoat comprises essentially no transition metals other than platinum, manganese, and zirconium.

In some embodiments, the first washcoat comprises essentially no transition metals other than platinum and palladium.

In some embodiments, the zeolite is Beta zeolite. In some embodiments, the first zone has a loading of Beta zeolite ranging from 0.1 g/in$^3$ to 1 g/in$^3$.

In some embodiments, the first washcoat comprises at least one functional additive chosen from magnesium oxide, calcium oxide, strontium oxide, barium oxide, gallium oxide, indium oxide, germanium oxide, antimony oxide, and combinations thereof.

In some embodiments, the first and/or second washcoat comprises platinum nanoparticles.

In some embodiments, the first refractory metal oxide support comprises palladium.

In some embodiments, the first washcoat comprises a total platinum group metal content from 0.5 weight % to 20 weight %, by total weight of the first washcoat.

In some embodiments, the second washcoat comprises from 2 weight % to 10 weight % platinum, by total weight of the second washcoat.

In some embodiments, the second washcoat comprises from 0.5 weight % to 10 weight % manganese, by total weight of the second washcoat.

In some embodiments, the first washcoat has a weight ratio of platinum to palladium from 1:1 to 10:1. In some embodiments, the first washcoat has a weight ratio of platinum to palladium from 1:1 to 5:1.

In some embodiments, a weight ratio of platinum in the first washcoat to platinum in the second washcoat ranges from 15:1 to 1:5.

In some embodiments, the first zone has a washcoat loading ranging from 1 g/in$^3$ to 5 g/in$^3$. In some embodiments, the first zone has a washcoat loading ranging from 0.5 g/in$^3$ to 5 g/in$^3$. In some embodiments, the first zone has a higher washcoat loading than the second zone.

In some embodiments, the first washcoat has a platinum concentration ranging from 0.5 weight % to 5 weight %, by total weight of the first washcoat. In some embodiments, the first washcoat has a palladium concentration ranging from 0.1 weight % to 2 weight %, by total weight of the first washcoat. In some embodiments, the second washcoat has a platinum concentration ranging from 2 weight % to 6 weight %, by total weight of the second washcoat. In some embodiments, second washcoat has a palladium concentration ranging from 0 weight % to 0.5 weight %, by total weight of the second washcoat.

In some embodiments, the catalytic article has a total platinum group metal loading ranging from 10 g/ft$^3$ to 150 g/ft$^3$. In some embodiments, catalytic article has a total platinum group metal loading ranging from 10 g/ft$^3$ to 50 g/ft$^3$. In some embodiments, catalytic article has a total platinum group metal loading ranging from 50 g/ft$^3$ to 150 g/ft$^3$.

**Substrates:**

In some embodiments, one or more washcoats are disposed on one or more substrates to form, e.g., a catalytic article. In some embodiments, the one or more substrates are 3-dimensional and have a length, a diameter, and a volume. In some embodiments, the one or more substrates are cylindrical. In some embodiments, the one or more substrates are not cylindrical. In some embodiments, the one or more substrates have an axial length from an inlet end to an outlet end.

In some embodiments, the one or more substrates are ceramic substrates. In some embodiments, the ceramic substrates are made of any suitable refractory material, e.g., cordierite, cordierite-$\alpha$-alumina, aluminum titanate, silicon titanate, silicon carbide, silicon nitride, zircon mullite, spodumene, alumina-silica-magnesia, zircon silicate, sillimanite, a magnesium silicate, zircon, petalite, $\alpha$-alumina, an aluminosilicate and the like.

In some embodiments, the substrates comprise one or more metals or metal alloys. In some embodiments, a metallic substrate may include any metallic substrate, such as those with openings or "punch-outs" in the channel walls. In some embodiments, the metallic substrates may be employed in various shapes, such as pellets, compressed metallic fibers, corrugated sheets, or monolithic foams. In some embodiments, metallic substrates include heat-resistant, base-metal alloys, especially those in which iron is a substantial or major component. Such alloys may contain one or more of nickel, chromium, and aluminum, and the total of these metals may comprise at least about 15 wt% (weight percent) of the alloy, for instance, about 10 wt% to about 25 wt% chromium, about 1 wt% to about 8 wt% of aluminum, and about 0 wt% to about 20 wt% of nickel, in each case based on the weight of the substrate. In some embodiments, metallic substrates include those having straight channels; those having protruding blades along the axial channels to disrupt gas flow and to open communication of gas flow between channels; and those having blades and also holes to enhance gas transport between channels allowing for radial gas transport throughout the monolith.

In some embodiments, any suitable substrate may be employed, such as a monolithic substrate of the type having fine, parallel gas flow passages extending there through from an inlet to an outlet face of the substrate such that passages are open to fluid flow there through ("flow-through substrate"). In some embodiments, a substrate has a plurality of fine, substantially parallel gas flow passages extending along the longitudinal axis of the substrate where, e.g., each passage is blocked at one end of the substrate body, with alternate passages blocked at opposite end-faces ("wall-flow filter").

In some embodiments, the substrate comprises a honeycomb substrate in the form of a wall-flow filter or a flow-through substrate. In some embodiments, the substrate is a wall-flow filter. In some embodiments, the substrate is a flow-through substrate.

In some embodiments, the substrate is a flow-through substrate (e.g., a monolithic substrate, including a flow-through honeycomb monolithic substrate). In some embodiments, flow-through substrates have fine, parallel gas flow passages extending from an inlet end to an outlet end of the substrate such that passages are open to fluid flow. In some embodiments, passages, which are paths from the inlet to the outlet, have walls on or in which a coating is disposed so that gases flowing through the passages contact the coated material. In some embodiments, the flow passages of the flow-through substrate are thin-walled channels, which can be of any suitable cross-sectional shape and size such as trapezoidal, rectangular, square, sinusoidal, hexagonal, oval, circular, etc. The flow-through substrate can be ceramic or metallic as described above.

In some embodiments, flow-through substrates have a volume of from about 50 in$^3$ to about 1200 in$^3$, a cell density (inlet openings) of from about 60 cells per square inch (cpsi) to about 500 cpsi or up to about 900 cpsi, for example, from about 200 to about 400 cpsi, and a wall thickness of from about 50 microns to about 200 microns or about 400 microns.

In some embodiments, the substrate is a wall-flow filter having a plurality of fine passages extending along the longitudinal axis of the substrate. In some embodiments, each passage is blocked at one end of the substrate body, with alternate passages blocked at opposite end-faces. In some embodiments, monolithic wall-flow filter substrates may contain up to about 900 or more flow passages (or "cells") per square inch of cross-section, although fewer may be used. For example, the substrate may have from about 7 to 600, e.g. from about 100 to 400, cells per square inch ("cpsi"). In some embodiments, the cells have cross-sections that are rectangular, square, circular, oval, triangular, hexagonal, or are of other polygonal shapes. In some embodiments, the wall-flow filter substrate is ceramic or metallic as described above.

In some embodiments, the wall-flow filter article substrate has a volume of, for example, from about 50 cm$^3$, about 100 in$^3$, about 200 in$^3$, about 300 in$^3$, about 400 in$^3$, about 500 in$^3$, about 600 in$^3$, about 700 in$^3$, about 800 in$^3$, about 900 in$^3$ or about 1000 in$^3$ to about 1500 in$^3$, about 2000 in$^3$, about 2500 in$^3$, about 3000 in$^3$, about 3500 in$^3$, about 4000 in$^3$, about 4500 in$^3$ or about 5000 in$^3$. In some embodiments, wall-flow filter substrates have a wall thickness from about 50 microns to about 2000 microns, for example from about 50 microns to about 450 microns or from about 150 microns to about 400 microns.

In some embodiments, the walls of the wall-flow filter are porous and have a wall porosity of at least about 40% or at least about 50% with an average pore diameter of at least about 10 microns prior to disposition of the functional coating. For example, in some embodiments, the wall-flow filter article substrate has a porosity of $\geq 40\%$, $\geq 50\%$, $\geq 60\%$, $\geq 65\%$, or $\geq 70\%$. In some embodiments, the wall-flow filter article substrate has a wall porosity of from about 50%, about 60%, about 65% or about 70% to about 75% and an average pore diameter of from about 10 microns, or about 20 microns, to about 30 microns, or about 40 microns prior to disposition of a catalytic coating. The terms "wall porosity" and "substrate porosity" mean the same thing and are used interchangeably herein. Porosity is the ratio of void volume (or pore volume) divided by the total volume of a substrate material. Pore size and pore size distribution may be determined by, e.g., Hg porosimetry measurement.

**Washcoats:**

In some embodiments, a slurry is coated on a substrate using a washcoat technique known in the art. Washcoats are, for example, as described in Heck, Ronald and Farrauto, Robert, Catalytic Air Pollution Control, New York: Wiley-Interscience, 2002, pp. 18-19, as a compositionally distinct layer of material disposed on the surface of a monolithic substrate or an underlying washcoat layer. In some embodiments, a substrate contains one or more washcoat layers, and each washcoat layer can have different composition.

In some embodiments, the substrate is dipped one or more times in the slurry or otherwise coated with the slurry, e.g., sprayed. In some embodiments, the coated substrate is dried at an elevated temperature (e.g., 100°C to 150°C) in static air or under a flow or jet of air for about 2 minutes to about 3 hours, and then calcined by heating, e.g., at 400°C to 600°C, for about 10 minutes to about 3 hours. In some embodiments, following drying and calcining, the final washcoat coating layer is essentially solvent-free.

In some embodiments, after calcining, the washcoat loading can be determined through calculation of the difference in coated and uncoated weights of the substrate. As will be apparent to those of skill in the art, the washcoat loading can be modified by altering the slurry rheology, solids content or number of coating operations. In some embodiments, the coating/drying/calcining process is repeated as needed to build the coating to the desired loading level or thickness.

In some embodiments, a composition is applied as a single layer or in multiple layers. In some embodiments, a layer resulting from repeated wash-coating of the same material to build up the loading level is a single layer. In some embodiments, a composition can be zone-coated, meaning a single substrate can be coated with different catalyst compositions in different areas along the axial gas effluent flow path.

In some embodiments, a composition is mixed with water to form a slurry for the purposes of coating a substrate. In some embodiments, the slurry further comprises an inorganic binder, an associative thickener, or a surfactant (e.g. one or more anionic, cationic, non-ionic or amphoteric surfactants). The order of addition can vary; in some embodiments, all components are simply combined together to form the slurry and, in some embodiments, certain components are combined and remaining components are then combined therewith. In some embodiments, the pH of the slurry can be adjusted, e.g., to an acidic pH of about 3 to about 5.

In some embodiments, the slurry is milled. In some embodiments, the milling is accomplished in a ball mill, continuous mill, or other similar equipment, and the solids content of the slurry may be, e.g., about 20 wt. %, to about 60 wt. %, about 30 wt. %, to about 40 wt. %. In some embodiments, the post-milling slurry is characterized by a D90 particle size of about 10 microns to about 50 microns (e.g., about 10 microns to about 20 microns).

In some embodiments, the first and second washcoats are in a layered relationship. In some embodiments, the first and second washcoats are in a layered relationship and the first washcoat is layered on top of the second washcoat which is directly layered on the substrate. In some embodiments, the first and second washcoats are in a layered relationship and the second washcoat is layered on top of the first washcoat which is directly layered on the substrate.

In some embodiments, the first and second washcoats are in a zoned relationship. In some embodiments, the first washcoat is in an upstream zone and the second washcoat is in a downstream zone. In some embodiments, the first washcoat is coated on x% of the axial length of the substrate; wherein x ranges from greater than 0% to less than 100% from the inlet face of the coated structure. In some embodiments, the second washcoat is coated on y% of the axial length of the substrate; wherein y ranges from greater than 0% to less than 100% from the outlet face of the coated structure. In some embodiments, x% is 10% and y% is 90%. In some embodiments, x% is 20% and y% is 80%. In some embodiments, x% is 30% and y% is 70%. In some embodiments, x% is 40% and y% is 60%. In some embodiments, x% is 50% and y% is 50%. In some embodiments, x% is 60% and y% is 40%. In some embodiments, x% is 70% and y% is 30%. In some embodiments, x% is 80% and y% is 20%. In some embodiments, x% is 90% and y% is 10%.

In some embodiments, the first and second washcoats are in a zoned and layered relationship wherein a portion of the first washcoat and a portion of the second washcoat overlap. In some embodiments, the first washcoat is coated, directly or indirectly, on x% of the axial length of the substrate; wherein x ranges from greater than 0% to less than 100% from the inlet face of the coated structure. In some embodiments, the second washcoat is coated, directly or indirectly, on y% of the axial length of the substrate; wherein y ranges from greater than 0% to less than 100% from the outlet face of the coated structure. In some embodiments, x% + y% ranges from 100% to 180%. In some embodiments, x% + y% ranges from 100% to 150%. In some embodiments, x% + y% ranges from 100% to 120%. In some embodiments, x% + y% ranges from 100% to 110%. In some embodiments, x% + y% ranges from 100% to 105%. In some embodiments, a portion of the first washcoat and a portion of the second washcoat overlap such that x% + y% is greater than 100%. In some embodiments, the first washcoat overlaps the second washcoat. In some embodiments, the second washcoat overlaps the first washcoat.

In some embodiments, the second washcoat is layered at least partially on top of the first washcoat, and the second washcoat comprises Pt, Mn, Zr, and optionally Pd.

**Zeolites:**

In some embodiments, the first washcoat comprises a zeolite. In some embodiments, the zeolite has a framework type chosen from ABW, ACO, AEI, AEL, AEN, AET, AFG, AFI, AFN, AFO, AFR, AFS, AFT, AFV, AFX, AFY, AHT, ANA, APC, APD, AST, ASV, ATN, ATO, ATS, ATT, ATV, AVL, AWO, AWW, BCT, BEA, BEC, BIK, BOF, BOG, BOZ, BPH, BRE, BSV, CAN, CAS, CDO, CFI, CGF, CGS, CHA, -CHI, -CLO, CON, CSV, CZP, DAC, DDR, DFO, DFT, DOH, DON, EAB, EDI, EEI, EMT, EON, EPI, ERI, ESV, ETR, EUO, *-EWT, EZT, FAR, FAU, FER, FRA, GIS, GIU, GME, GON, GOO, HEU, IFO, IFR, -IFU, IFW, IFY, IHW, IMF, IRN, IRR, -IRY, ISV, ITE, ITG, ITH, *-ITN, ITR, ITT, -ITV, ITW, IWR, IWS, IVW, IWW, JBW, JNT, JOZ, JRY, JSN, JSR, JST, JSW, KFI, LAU, LEV, LIO, -LIT, LOS, LOV, LTA, LTF, LTJ, LTL, LTN, MAR, MAZ, MEI, MEL, MEP, MER, MFI, MFS, MON, MOR, MOZ, *MRE, MSE, MSO, MTF, MTN, MTT, MTW, MVY, MWF, MWW, NAB, NAT, NES, NON, NPO, NPT, NSI, OBW, OFF, OKO, OSI, OSO, OWE, -PAR, PAU, PCR, PHI, PON, POS, PSI, PUN, RHO, -RON, RRO, RSN, RTE, RTH, RUT, RWR, RWY, SAF, SAO, SAS, SAT, SAV, SBE, SBN, SBS, SBT, SEW, SFE, SFF, SFG, SFH, SFN, SFO, SFS, *SFV, SFW, SGT, SIV, SOD, SOF, SOS, SSF, *-SSO, SSY, STF, STI, *STO, STT, STW, - SVR, SW, SZR, TER, THO, TOL, TON, TSC, TUN, UEI, UFI, UOS, UOV, UOZ, USI, UTL, UWY, VET, VFI, VNI, VSV, WEI, -WEN, YUG, ZON, and combinations thereof. In some embodiments, the zeolite comprises 10-member rings and/or 12-member rings. In some embodiments, the zeolite is chosen from a Beta zeolite (BEA), a ferrierite zeolite (FER), a Zeolite Socony Mobil-5 zeolite (ZSM-5), and a faujasite zeolite (FAU).

**Exhaust Gas Treatment Systems:**

In some embodiments, an exhaust gas treatment system comprises an engine and a catalytic article disclosed herein.

In some embodiments, an exhaust gas treatment system comprises a catalytic article disclosed herein upstream of a catalytic composition comprising a zeolite ion-exchanged with copper and/or iron, and the catalytic article and the catalytic composition are on different substrates. In some embodiments, an exhaust gas treatment system comprises a catalytic article disclosed herein upstream of a catalytic composition comprising a zeolite ion-exchanged with copper and/or iron, and the catalytic article and the catalytic composition are on the same substrate.

In some embodiments, an exhaust gas treatment system comprises a catalytic article disclosed herein upstream of a selective catalytic reduction catalyst. In some embodiments, an exhaust gas treatment system comprises a catalytic article disclosed herein upstream of a catalyzed soot filter.

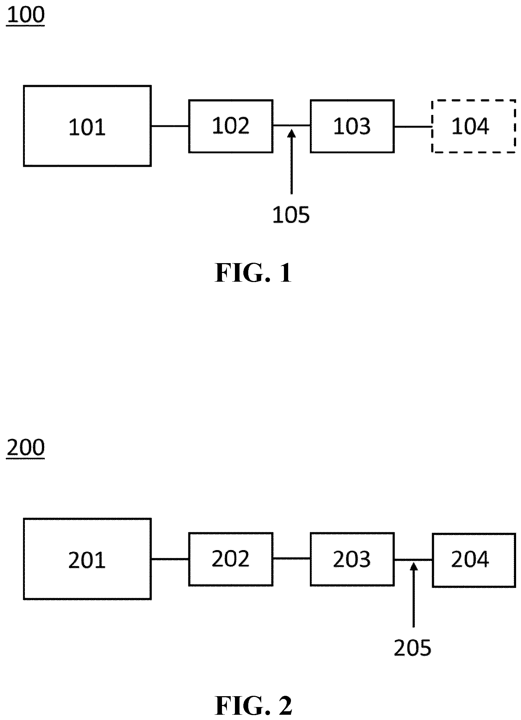

Fig. 1 depicts an exemplary exhaust gas treatment system (100) comprising an engine (101), a diesel oxidation catalyst (102), a reductant injector (105) for injecting a reductant such as, e.g., urea or ammonia, a selective catalytic reduction catalyst (103), and, optionally, a catalyzed soot filter (104).

Fig. 2 depicts and exemplary exhaust gas treatment system (200) comprising an engine (201), a diesel oxidation catalyst (202), a reductant injector (205) for injecting a reductant such as, e.g., urea or ammonia, a catalyzed soot filter (203), and a selective catalytic reduction catalyst (204).

**Methods of Treating an Exhaust Gas:**

In some embodiments, a method of treating an exhaust gas comprises: contacting the exhaust gas with a catalytic article disclosed herein. In some embodiments, a method of treating an exhaust gas comprises: contacting the exhaust gas with an exhaust gas treatment system disclosed herein.

**Catalyzed Soot Filters:**

Catalyzed soot filters provide an exemplary means for trapping and oxidizing soot particles entrained within an engine exhaust stream. Non-limiting exemplary catalyzed soot filters comprise a catalyst composition comprising platinum group metal, wherein the catalyst composition is deposed on a wall-flow substrate filter. Non-limiting exemplary catalyzed soot filters are disclosed in International Application No. PCT/US2004/024864, filed July 30, 2004; International Application No. PCT/US2006/043574, filed November 8, 2006; International Application No. PCT/US2007/086095, filed November 30, 2007; International Application No. PCT/US2016/024889, filed March 30, 2016; and International Application No. PCT/US2011/061681, filed November 21, 2011; the disclosure of each of which is incorporated herein by reference in its entirety.

**Selective Catalytic Reduction Catalyst:**

Selective catalytic reduction catalysts provide an exemplary means for selectively reducing nitrogen oxides entrained within an engine exhaust stream. Non-limiting exemplary selective catalytic reduction catalysts comprise a zeolite ion-exchanged with copper and/or iron. Non-limiting exemplary selective catalytic reduction catalysts are disclosed in International Application No. PCT/IB2011/051526, filed April 8, 2011; International Application No. PCT/US2013/065498, filed October 17, 2013; International Application No. PCT/EP2019/069878, filed July 24, 2019; International Application No. PCT/EP2019/079081, filed October 24, 2019; and International Application No. PCT/US2016/019842, filed February 26, 2016; the disclosure of each of which is incorporated herein by reference in its entirety.

**Non-Limiting Exemplary Embodiments:**

Without limitation, some embodiments of this disclosure include:

1. A catalytic article, comprising: a substrate having a length and comprising an inlet end, and an outlet end, a first zone comprising a first washcoat deposited on at least a portion of the substrate, and a second zone, at least partially downstream of the first zone, comprising a second washcoat deposited on at least a portion of the substrate; wherein: the first zone has a total platinum group metal loading ranging from 1 $g/ft^3$ to 220 $g/ft^3$; and the first washcoat comprises: a first refractory metal oxide support, platinum, palladium, and, optionally, a zeolite; and the second zone has a total platinum group metal loading ranging from 1 $g/ft^3$ to 200 $g/ft^3$, and the second washcoat comprises: a second refractory metal oxide support, an amount of platinum ranging from 2 weight % to 10 weight %, by total weight of the second washcoat, an amount of manganese ranging from 0.5 weight % to 30 weight %, and a weight ratio of platinum to manganese ranging from 1:10 to 20:1.

2. The catalytic article according to embodiment 1, wherein the first and second refractory metal oxide supports each independently comprises at least one metal oxide chosen from alumina, silica, titania, ceria, zirconia, and combinations thereof.

3. The catalytic article according to embodiment 1 or 2, wherein the second washcoat comprises essentially no platinum group metals other than platinum.

4. The catalytic article according to anyone of embodiments 1 to 3, wherein the second washcoat comprises essentially no transition metals other than platinum, manganese, optionally titanium, and optionally zirconium.

5. The catalytic article according to anyone of embodiments 1 to 4, wherein the first and/or second washcoat comprises platinum nanoparticles.

6. The catalytic article according to anyone of embodiments 1 to 5, wherein the first refractory metal oxide support further comprises palladium.

7. The catalytic article according to anyone of embodiments 1 to 6, wherein the first washcoat comprises a total platinum group metal content from 0.5 weight % to 10 weight %, by total weight of the first washcoat.

8. The catalytic article according to anyone of embodiments 1 to 7, wherein the second washcoat comprises from 2 weight % to 10 weight % platinum, by total weight of the second washcoat.

9. The catalytic article according to anyone of embodiments 1 to 8, wherein the second washcoat comprises from 0.5 weight % to 30 weight % manganese, by total weight of the second washcoat.

10. The catalytic article according to anyone of embodiments 1 to 9, wherein the first washcoat has a weight ratio of platinum to palladium from 1:1 to 10:1.

11. The catalytic article according to anyone of embodiments 1 to 10, wherein a weight ratio of platinum in the first washcoat to platinum in the second washcoat ranges from 15:1 to 1:5.

12. An exhaust gas treatment system comprising the catalytic article according to anyone of embodiments 1 to 11.

13. An exhaust gas treatment system comprising the catalytic article according to any one of embodiments 1 to 11, a catalyzed soot filter, and a selective catalytic reduction catalyst, wherein the catalyzed soot filter and the selective catalytic reduction catalyst are downstream from the catalytic article.

14. A method for treating a diesel engine exhaust gas stream comprising contacting the exhaust gas stream with the catalytic article according to any one of embodiments 1 to 11.

## EXAMPLES

The following examples are intended to be illustrative and are not meant in any way to limit the scope of the disclosure.

**Example 1** was prepared by coating front and rear zone segments separately on 1" diameter x 1.5" long cordierite honeycomb substrates and then combining the coated cores sequentially for subsequent aging and testing. The front zone segment was prepared by first impregnating Pd nitrate solution onto a commercial alumina support powder comprising 5% silica and having a BET surface area of approximately 150 $m^2$/g and a pore volume of about 0.6 $cm^3$/g using incipient wetness impregnation techniques known in the art. After adding barium hydroxide at a weight percentage twice that of the Pd, the impregnated powder was combined with a solution comprising Pt nanoparticles dispersed in water. After milling the resulting mixture to a particle size suitable for coating, Beta zeolite and boehmite alumina binder was added. The resulting slurry was then coated onto a cordierite substrate which was dried and subsequently calcined at 590°C for 1h. The rear zone segment was prepared by first combining a commercial alumina support powder comprising 5% manganese dioxide and having a BET surface area of approximately 150 $m^2$/g and a pore volume of about 0.8 $cm^3$/g with a solution comprising Pt nanoparticles dispersed in water. After milling the resulting mixture to a particle size suitable for coating, boehmite alumina binder was added. The resulting slurry was then coated onto a cordierite substrate which was dried and subsequently calcined at 590°C for 1h.

The front zone had a washcoat loading of 2.08 g/in$^3$ comprising 1.5 g/in$^3$ of 4:1 weight ratio Pt-Pd supported on 5% $SiO_2$-$Al_2O_3$, 0.45 g/in$^3$ of Beta zeolite and 0.10 g/in$^3$ of boehmite binder. Pt loading was 30.3 g/ft$^3$, and Pd loading was 7.6 g/ft$^3$ based on the volume of the front zone core only. The rear zone had a washcoat loading of 0.3 g/in$^3$

comprising Pt supported on 5% $MnO_2$-$Al_2O_3$ and 0.02 g/in$^3$ of boehmite binder. Pt loading was 32.1 g/ft$^3$ based on the volume of the rear zone core only. Total Pt-Pd loading for the front zone + rear zone assembly was 35 g/ft$^3$ based on the volume of the combined front and rear zones.

**Example 2** was prepared similarly to Example 1 except that the Pt support used in the rear zone comprised 1.5 g/in$^3$ of 5% $MnO_2$-$Al_2O_3$. Pt loading was 32.1 g/ft$^3$ based on the volume of the rear zone core only.

**Example 3** was prepared similarly to Example 1 except that the Pt support used in the rear zone comprised 2.5 g/in$^3$ of 5% $MnO_2$-$Al_2O_3$. Pt loading was 32.1 g/ft$^3$ based on the volume of the rear zone core only.

**Example 4** was prepared similarly to Example 1 except that the Pt support used in the rear zone comprised 1.5 g/in$^3$ of a zirconia support powder comprising about 20% manganese dioxide and having a BET surface area of about 200 m$^2$/g and a pore volume of about 0.4 cm$^3$/g. Pt loading was 32.1 g/ft$^3$ based on the volume of the rear zone core only.

**Example 5** was prepared similarly to Example 4 except that the PGM in the rear zone comprised 9:1 Pt-Pd by weight ratio instead of Pt. Pt loading was 28.8 g/ft$^3$ and Pd loading was 3.2 g/ft$^3$ based on the volume of the rear zone core only.

Additional Examples were made according to the above procedures and had the properties disclosed in Tables 1, 2, 3. The support comprising 1% Y used in Examples 6, 7, 8, 10 and 12 was prepared by impregnating the 5% $SiO_2$-$Al_2O_3$ support of Examples 1-5 with Y nitrate solution using methods commonly known in the art. The alumina support of Examples 15, 17 and 18 had a BET surface area of about 70 m$^2$/g and a pore volume of about 1.0 cm$^3$/g.

Table 1, Front Zone Properties:

| Example | PGM Loading (g/ft$^3$) | Pt-Pd Ratio | Washcoat Loading (g/in$^3$) | Pt(wt %) | Pd (wt %) | Front Zone Support |
|---|---|---|---|---|---|---|
| 6 | 130 | 4 | 2.0 | 3.1 | 0.8 | 1% Y on 5% $SiO_2$-$Al_2O_3$ (1.5 g/in$^3$) + zeolite (0.3 g/in$^3$) |
| 7 | 130 | 2 | 2.0 | 2.5 | 1.3 | 1% Y on 5% $SiO_2$-$Al_2O_3$ (1.5 g/in$^3$) + zeolite (0.3 g/in$^3$) |
| 8 | 130 | 4 | 2.0 | 3.1 | 0.8 | 1% Y on 5% $SiO_2$-$Al_2O_3$ (1.5 g/in$^3$) + zeolite (0.3 g/in$^3$) |
| 9 | 130 | 4 | 2.1 | 2.8 | 0.7 | 5% $SiO_2$-$Al_2O_3$ (1.5 g/in$^3$) + zeolite (0.45 g/in$^3$) |
| 10 | 97.2 | 4 | 2.1 | 2.1 | 0.5 | 1% Y on 5% $SiO_2$-$Al_2O_3$ (1.5 g/in$^3$) + zeolite (0.45 g/in$^3$) |
| 11 | 130 | 1.5 | 3.95 | 2.1 | 1.4 | 5% $SiO_2$-$Al_2O_3$ (3.0 g/in$^3$) + zeolite (0.8 g/in$^3$) |
| 12 | 111.2 | 4 | 2.1 | 2.4 | 0.6 | 1% Y on 5% $SiO_2$-$Al_2O_3$ (1.5 g/in$^3$) + zeolite (0.45 g/in$^3$) |
| 13 | 27 | 4 | 1.6 | 0.8 | 0.2 | 5% $SiO_2$-$Al_2O_3$ (1.5 g/in$^3$) |
| 14 | 27 | 4 | 1.6 | 0.8 | 0.2 | 5% $SiO_2$-$Al_2O_3$ (1.5 g/in$^3$) |
| 15 | 27 | 4 | 1.6 | 0.8 | 0.2 | $Al_2O_3$ (1.5 g/in$^3$) + zeolite (0.45 g/in$^3$) |
| 16 | 27 | 4 | 1.6 | 0.8 | 0.2 | 5% $SiO_2$-$Al_2O_3$ (1.5 g/in$^3$) |
| 17 | 27 | 4 | 1.6 | 0.8 | 0.2 | $Al_2O_3$ (1.5 g/in$^3$) |
| 18 | 27 | 4 | 1.6 | 0.8 | 0.2 | $Al_2O_3$ (1.5 g/in$^3$) |

Table 2, Rear Zone Properties:

| Example | PGM Loading (g/ft$^3$) | Pt-Pd Ratio | Washcoat Loading (g/in$^3$) | Pt (wt %) | Pd (wt %) | Rear Zone Support |
|---|---|---|---|---|---|---|
| 6 | 50 | Pt-only | 0.5 | 5.6 | 0 | 5% $MnO_2$-$Al_2O_3$ (0.47 g/in$^3$) |

(continued)

| Example | PGM Loading (g/ft$^3$) | Pt-Pd Ratio | Washcoat Loading (g/in$^3$) | Pt (wt %) | Pd (wt %) | Rear Zone Support |
|---|---|---|---|---|---|---|
| 7 | 50 | Pt-only | 0.5 | 5.6 | 0 | 5% $MnO_2$-$Al_2O_3$ (0.47 g/in$^3$) |
| 8 | 50 | Pt-only | 0.5 | 5.6 | 0 | 5% $MnO_2$-$Al_2O_3$ (0.47 g/in$^3$) |
| 9 | 110 | Pt-only | 1.6 | 4.0 | 0 | 5% $MnO_2$-$Al_2O_3$ (1.5 g/in$^3$) |
| 10 | 82.8 | Pt-only | 1.6 | 3.0 | 0 | 5% $MnO_2$-$Al_2O_3$ (1.5 g/in$^3$) |
| 11 | 88 | 15 | 1.6 | 3.0 | 0.2 | 5% $MnO_2$-$Al_2O_3$ (1.5 g/in$^3$) |
| 12 | 47 | Pt-only | 1.6 | 1.7 | 0 | 5% $MnO_2$-$Al_2O_3$ (1.5 g/in$^3$) |
| 13 | 23 | Pt-only | 1.6 | 0.8 | 0 | 5% $MnO_2$-$Al_2O_3$ (1.5 g/in$^3$) |
| 14 | 23 | Pt-only | 0.3 | 4.1 | 0 | 5% $MnO_2$-$Al_2O_3$ (0.3 g/in$^3$) |
| 15 | 23 | 10 | 0.5 | 2.3 | 0.2 | 5% $MnO_2$-$Al_2O_3$ (0.5 g/in$^3$) |
| 16 | 23 | Pt-only | 0.3 | 4.1 | 0 | 5% $SiO_2$-$Al_2O_3$ (0.3 g/in$^3$) |
| 17 | 23 | Pt-only | 0.8 | 1.6 | 0 | 5% $SiO_2$-$Al_2O_3$ (0.8 g/in$^3$) |
| 18 | 23 | 10 | 0.5 | 2.3 | 0.2 | 5% $SiO_2$-$Al_2O_3$ (0.5 g/in$^3$) |

**Hydrothermal Aging:** Prior to testing for catalytic activity, examples 1-12 were aged in the presence of steam at high temperature using conditions relevant for light duty diesel applications (i.e., passenger cars, vans, etc.). The samples were exposed to a flowing gas comprising 10% steam ($H_2O$) in air at 800°C for 16 hours. Examples 13-18 were aged in the presence of steam at high temperature using conditions relevant for heavy duty diesel applications (i.e., trucks, buses, etc.). The samples were exposed to a flowing gas comprising 10% steam ($H_2O$) in air at 650°C for 50 hours. All hydrothermal aging conditions are summarized in Table 3.

Table 3, total PGM loading and aging conditions:

| Example | Total PGM Loading (g/ft$^3$) | Aging Conditions |
|---|---|---|
| 1 | 35 | 16h (800°C, 10% steam/air) |
| 2 | 35 | 16h (800°C, 10% steam/air) |
| 3 | 35 | 16h (800°C, 10% steam/air) |
| 4 | 35 | 16h (800°C, 10% steam/air) |
| 5 | 35 | 16h (800°C, 10% steam/air) |
| 6 | 90 | 16h (800°C, 10% steam/air) |
| 7 | 90 | 16h (800°C, 10% steam/air) |
| 8 | 90 | 16h (800°C, 10% steam/air) |
| 9 | 120 | 16h (800°C, 10% steam/air) |

(continued)

| Example | Total PGM Loading (g/ft³) | Aging Conditions |
|---|---|---|
| 10 | 90 | 16h (800°C, 10% steam/air) |
| 11 | 90 | 16h (800°C, 10% steam/air) |
| 12 | 90 | 16h (800°C, 10% steam/air) |
| 13 | 25 | 50h (650°C, 10% steam/air) |
| 14 | 25 | 50h (650°C, 10% steam/air) |
| 15 | 25 | 50h (650°C, 10% steam/air) |
| 16 | 25 | 50h (650°C, 10% steam/air) |
| 17 | 25 | 50h (650°C, 10% steam/air) |
| 18 | 25 | 50h (650°C, 10% steam/air) |

**Testing:** After aging, Examples 1-12 were tested on a laboratory reactor using conditions relevant for light-duty diesel applications (i.e., passenger cars, vans, etc.). The reactant gas composition consisted of 1450 ppm CO, 30 ppm-C1 $CH_4$, 120 ppm-C1 $C_3H_6$, 216 ppm-C1 decane, 84 ppm-C1 toluene, 120 ppm NO, 15% $O_2$, 5% $CO_2$, 10% $H_2O$, and balance $N_2$. The temperature of the catalyst was ramped from 80°C to 400°C at 20°C/min. The flow through the catalyst expressed as space velocity was 56,000/h. The concentrations of CO, HC and NOx (NO, $NO_2$ and $N_2O$) were measured at the outlet of the reactor as a function of temperature during the course of the test. Conversion of CO and HC were calculated by comparing the inlet and outlet concentrations. The ratio of $NO_2$ to total NOx was calculated by dividing the amount of $NO_2$ by the amount of NO in the inlet gas stream. For the ppm-C1 values, the calculation is based on the number of carbon atoms in the specific component, not the number of molecules. For example, since methane has only one carbon, the ppm-C1 is the same as the ppm value on a molecular basis; however, since propylene has three carbon atoms per molecule ($C_3H_6$), 120 ppm-C1 = 40 ppm propylene on a molecular basis.

After aging, Examples 14-19 were tested on a laboratory reactor using conditions relevant for heavy duty diesel applications (i.e., trucks, buses, etc.). The reactant gas composition consisted of 100 ppm CO, 33 ppm-C1 $C_3H_6$, 33 ppm-C1 decane, 33 ppm-C1 toluene, 600 ppm NO, 10% $O_2$, 7% $CO_2$, 5% $H_2O$, and balance $N_2$. The temperature of the catalyst was ramped from 100°C to 500°C at 12°C/min. The flow through the catalyst expressed as space velocity was 60,000/h. The concentrations of CO, HC, and NOx, NO, $NO_2$ and $N_2O$, were measured at the outlet of the reactor as a function of temperature during the course of the test. Conversion of CO and HC were calculated by comparing the inlet and outlet concentrations. The ratio of $NO_2$ to total NOx was calculated by dividing the amount of $NO_2$ by the amount of NO in the inlet gas stream.

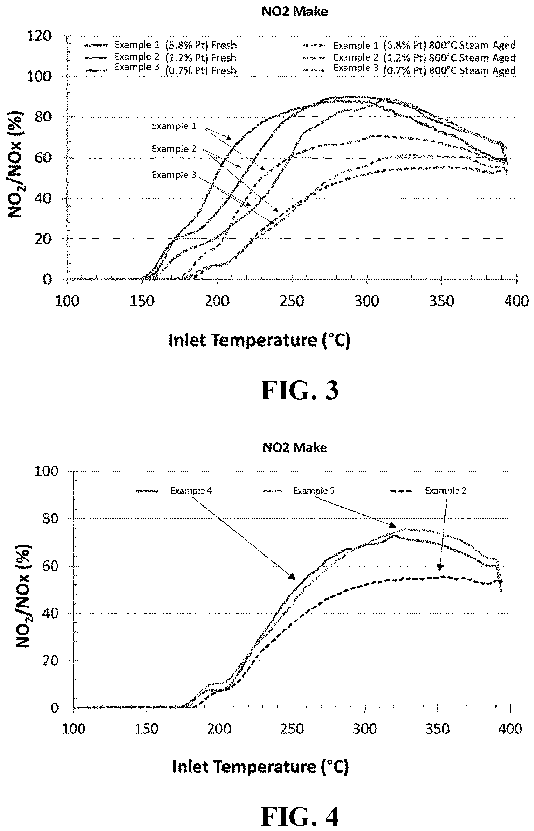

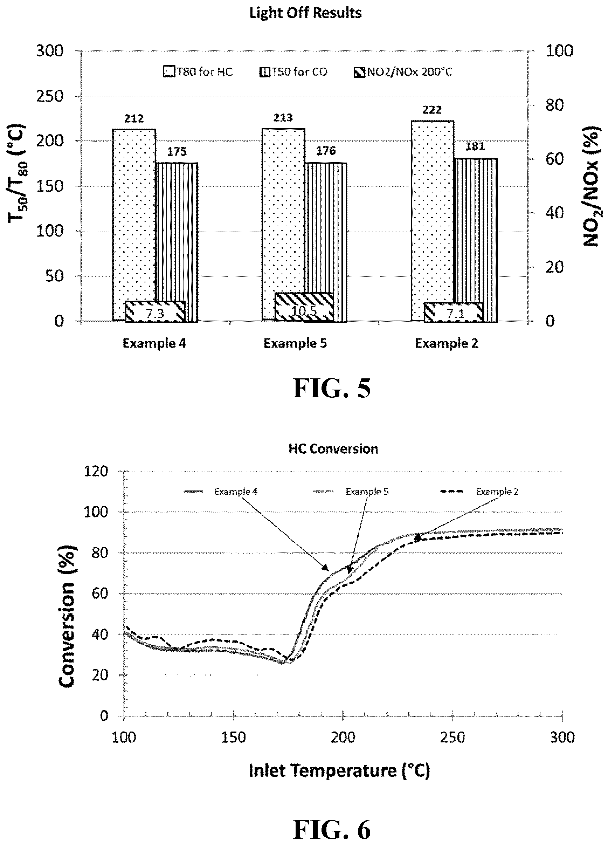

Outlet $NO_2/NO_x$ results as a function of temperature for Examples 1-3 before and after 800°C hydrothermal aging are provided in Fig. 3. Outlet $NO_2/NOX$ results as a function of temperature for Examples 2, 4 and 5 after 800°C hydrothermal aging are provided in Fig. 4. CO and HC light-off results and $NO_2/NO_X$ results at 200°C for Examples 2, 4 and 5 after 800°C hydrothermal aging are provided in Fig. 5. Hydrocarbon conversion results as a function of temperature for Examples 2, 4 and 5 after 800°C hydrothermal aging are provided in Fig. 6. $NO_2/NO_X$ results at 200°C for Examples 6-18 after either 650 or 800°C hydrothermal aging are provided in Table 4.

Table 4, $NO_2/NOX$ ratios for Examples 7-22:

| Example | Light-Off Test after 800°C Steam Aging Using Light Duty Relevant Test Conditions) | | Light-Off Test after 650°C Steam Aging Using Heavy Duty Relevant Test Conditions | |
|---|---|---|---|---|
| | $NO_2/NO_X$ @ 200°C | $NO_2/NO_X$ @ 250°C | $NO_2/NO_X$ @ 200°C | $NO_2/NO_X$ @ 250°C |
| 6 | 24.6 | 64.9 | | |
| 7 | 27.5 | 66.6 | | |
| 8 | 32.6 | 66.8 | | |
| 9 | 30.2 | 74 | | |
| 10 | 25.5 | 73 | | |
| 11 | 25.7 | 60.1 | | |

(continued)

| Example | Light-Off Test after 800°C Steam Aging Using Light Duty Relevant Test Conditions) | | Light-Off Test after 650°C Steam Aging Using Heavy Duty Relevant Test Conditions | |
|---|---|---|---|---|
| | $NO_2/NO_X$ @ 200°C | $NO_2/NO_X$ @ 250°C | $NO_2/NO_X$ @ 200°C | $NO_2/NO_X$ @ 250°C |
| 12 | 21.1 | 55.8 | | |
| 13 | | | 18.1 | 41.8 |
| 14 | | | 19.4 | 46.7 |
| 15 | | | 20.2 | 48.5 |
| 16 | | | 18.5 | 43.6 |
| 17 | | | 14.1 | 37.9 |
| 18 | | | 15.0 | 43.0 |

Comparing Examples 1-3 tested using conditions relevant to light duty diesel applications, NO oxidation performance expressed as the ratio of $NO_2$ generated to inlet $NO_x$ concentration was highest for Example 1 with a rear zone Pt concentration of 5.8%. This was true for both the fresh and 800°C steam aged catalysts. Moreover, the change in performance from fresh to aged was least for Example 1. While Example 3 with a rear zone Pt concentration of 0.7% had the lowest fresh performance, performance after aging was basically the same for Examples 2 and 3. Overall, significantly improved NO oxidation performance was realized when Mn-alumina support was combined with Pt at high concentration in the rear zone.

Comparing Examples 6-12 tested using conditions relevant to light duty diesel applications, NO oxidation performance expressed as the ratio of $NO_2$ generated to inlet $NO_x$ concentration was lowest for Example 12 with a rear zone Pt concentration of only 1.7%. Comparing Examples 13-18 tested using conditions relevant to heavy duty diesel applications, NO oxidation performance expressed as the ratio of $NO_2$ generated to inlet $NO_x$ concentration was lowest for Examples 14 and 18 with rear zone Pt concentrations less than 1.6%. Overall, significantly improved NO oxidation performance was realized when Mn-alumina support was combined with Pt at high concentration in the rear zone.

Comparing Examples 2, 4 and 5tested using conditions relevant to light duty diesel applications, the carbon monoxide T50 light-off temperature was reduced by about 5°C for Examples 4 and 5 comprising about 20% $MnO_2$-$ZrO_2$ in the rear zone relative to Example 2 comprising about 5% $MnO_2$-$Al_2O_3$ in the rear zone. HC T80 was reduced by about 10°C. Moreover, the ratio of $NO_2$ generated to inlet total NOx concentration was highest for Examples 4 and 5. Significantly improved carbon monoxide, hydrocarbon, and NO oxidation performance was realized when a Mn-zirconia support was used in Examples 4 and 5 to support Pt or Pt-Pd relative to a Mn-alumina material support as in Example 2.

Claims or descriptions that include "or" or "and/or" between at least one members of a group are considered satisfied if one, more than one, or all of the group members are present in, employed in, or otherwise relevant to a given product or process unless indicated to the contrary or otherwise evident from the context. The disclosure includes embodiments in which exactly one member of the group is present in, employed in, or otherwise relevant to a given product or process. The disclosure includes embodiments in which more than one, or all the group members are present in, employed in, or otherwise relevant to a given product or process.

Furthermore, the disclosure encompasses all variations, combinations, and permutations in which at least one limitation, element, clause, and descriptive term from at least one of the listed claims is introduced into another claim. For example, any claim that is dependent on another claim can be modified to include at least one limitation found in any other claim that is dependent on the same base claim. Where elements are presented as lists, such as, e.g., in Markush group format, each subgroup of the elements is also disclosed, and any element(s) can be removed from the group. It should be understood that, in general, where the disclosure, or aspects of the disclosure, is/are referred to as comprising particular elements and/or features, embodiments of the disclosure or aspects of the disclosure consist, or consist essentially of, such elements and/or features. For purposes of simplicity, those embodiments have not been specifically set forth in haec verba herein. Where ranges are given, endpoints are included. Furthermore, unless otherwise indicated or otherwise evident from the context and understanding of one of ordinary skill in the art, values that are expressed as ranges can assume any specific value or sub range within the stated ranges in different embodiments of the disclosure, unless the context clearly dictates otherwise.

Those of ordinary skill in the art will recognize or be able to ascertain using no more than routine experimentation, many equivalents to the specific embodiments of the disclosure described herein. Such equivalents are intended to be encompassed by the following claims.

**Claims**

1. A catalytic article, comprising:

   a substrate having a length and comprising an inlet end, and an outlet end,
   a first zone comprising a first washcoat deposited on at least a portion of the substrate, and
   a second zone, at least partially downstream of the first zone, comprising a second washcoat deposited on at least a portion of the substrate;
   wherein:

   the first zone has a total platinum group metal loading ranging from 1 $g/ft^3$ to 220 $g/ft^3$;
   the first washcoat comprises: a first refractory metal oxide support, platinum, palladium, and, optionally, a zeolite;
   the second zone has a total platinum group metal loading ranging from 1 $g/ft^3$ to 200 $g/ft^3$, and
   the second washcoat comprises: a second refractory metal oxide support, an amount of platinum ranging from 2 weight % to 10 weight %, by total weight of the second washcoat, an amount of manganese ranging from 0.5 weight % to 30 weight %, and a weight ratio of platinum to manganese ranging from 1:10 to 20:1.

2. The catalytic article according to claim 1, wherein the first and second refractory metal oxide supports each independently comprises at least one metal oxide chosen from alumina, silica, titania, ceria, zirconia, and combinations thereof.

3. The catalytic article according to claim 1 or 2, wherein the second washcoat comprises essentially no platinum group metals other than platinum, and/or wherein the second washcoat comprises essentially no transition metals other than platinum, manganese, optionally titanium, and optionally zirconium.

4. The catalytic article according to anyone of claims 1 to 3, wherein the first and/or second washcoat comprises platinum nanoparticles.

5. The catalytic article according to anyone of claims 1 to 4, wherein the first refractory metal oxide support comprises palladium.

6. The catalytic article according to anyone of claims 1 to 5, wherein the first washcoat comprises a total platinum group metal content from 0.5 weight % to 20 weight %, by total weight of the first washcoat, and/or wherein the second washcoat comprises from 2 weight % to 10 weight % platinum, by total weight of the second washcoat, and/or wherein the second washcoat comprises from 0.5 weight % to 10 weight % manganese, by total weight of the second washcoat.

7. The catalytic article according to anyone of claims 1 to 6, wherein the first washcoat has a weight ratio of platinum to palladium from 1:1 to 10:1, and/or wherein a weight ratio of platinum in the first washcoat to platinum in the second washcoat ranges from 15:1 to 1:5.

8. An exhaust gas treatment system comprising the catalytic article according to any one of claims 1 to 11, optionally comprising a catalyzed soot filter, and a selective catalytic reduction catalyst, wherein the catalyzed soot filter and the selective catalytic reduction catalyst are downstream from the catalytic article.

9. A method for treating a diesel engine exhaust gas stream comprising contacting the exhaust gas stream with the catalytic article according to any one of claims 1 to 7.

10. The catalytic article according to anyone of claims 1 to 4, wherein the second wash coat further comprises palladium.

11. The catalytic article according to anyone of claims 1 to 6, wherein the second washcoat comprises from 0.5 weight % to 25 weight % manganese, by total weight of the second washcoat.

12. The catalytic article according to anyone of claims 1 to 6, wherein the catalytic article comprises the zeolite, and the zeolite comprises 10-member rings and/or 12-member rings, optionally wherein the zeolite is chosen from a Beta zeolite (BEA), a ferrierite zeolite (FER), a Zeolite Socony Mobil-5 zeolite (ZSM-5), and a faujasite zeolite (FAU).

**13.** The catalytic article according to anyone of claims 1 to 5, wherein the first washcoat comprises a total platinum group metal content from 0.5 weight % to 10 weight % or 0.5 weight % to 5 weight %, by total weight of the first washcoat.

**14.** The catalytic article according to anyone of claims 1 to 6, wherein the catalytic article comprises a third zone wherein a portion of the first washcoat and a portion of the second washcoat overlap, optionally wherein, at the third zone, the portion of the first washcoat is between the substrate and the portion of the second washcoat.

**15.** The catalytic article according to any one of claims 1 to 6, and 14, wherein:

the first washcoat is coated, directly or indirectly, on x% of the axial length of the substrate;
the second washcoat is coated, directly or indirectly, on y% of the axial length of the substrate;
x ranges from greater than 0% to less than 100% from the inlet face of the coated structure;
y ranges from greater than 0% to less than 100% from the outlet face of the coated structure; and

$$x\% + y\% \text{ ranges from } 80\% \text{ to } 180\%.$$

100

```
┌───────────┐      ┌──────────┐   ┌──────────┐   ┌ ─ ─ ─ ─ ┐
│           │      │          │   │          │     ┌──────┐
│    101    │──────│   102    │───│   103    │───│ │ 104  │ │
│           │      │          │   │          │     └──────┘
└───────────┘      └──────────┘   └──────────┘   └ ─ ─ ─ ─ ┘
```

105

## FIG. 1

200

```
┌───────────┐      ┌──────────┐   ┌──────────┐   ┌──────────┐
│           │      │          │   │          │   │          │
│    201    │──────│   202    │───│   203    │───│   204    │
│           │      │          │   │          │   │          │
└───────────┘      └──────────┘   └──────────┘   └──────────┘
```

205

## FIG. 2

**NO2 Make**

**FIG. 3**

**NO2 Make**

**FIG. 4**

**Light Off Results**

**FIG. 5**

**HC Conversion**

**FIG. 6**

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2015/165422 A1 (SUNG SHIANG [US] ET AL) 18 June 2015 (2015-06-18) | 1-3, 5-13,15 | INV.<br>B01J23/40 |
| Y | * paragraphs [0094], [0067], [0068], [0056], [0096], [0067], [0072]; figure 4; table 1 * | 4,14 | B01J23/42<br>B01J23/34<br>B01J21/06 |
| | ----- | | B01D53/94 |
| Y | US 2019/015781 A1 (WEI XINYI [US] ET AL) 17 January 2019 (2019-01-17)<br>* paragraph [0006] * | 4 | B01J21/04<br>B01J29/08<br>B01J29/072 |
| | ----- | | B01J29/65 |
| Y | US 2015/273452 A1 (CHIFFEY ANDREW FRANCIS [GB] ET AL) 1 October 2015 (2015-10-01)<br>* figures 2, 3 * | 14 | B01J37/02 |
| | ----- | | |

TECHNICAL FIELDS
SEARCHED        (IPC)

B01J
B01D

The present search report has been drawn up for all claims

| Place of search | Date of completion of the search | Examiner |
|---|---|---|
| The Hague | 23 May 2022 | Campbell, Paul |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

    .......................................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 21 21 7681

This annex lists the patent family members relating to the patent documents cited in the above-mentioned European search report.
The members are as contained in the European Patent Office EDP file on
The European Patent Office is in no way liable for these particulars which are merely given for the purpose of information.

23-05-2022

| Patent document cited in search report | | | Publication date | Patent family member(s) | | | Publication date |
|---|---|---|---|---|---|---|---|
| US 2015165422 | A1 | | 18-06-2015 | CA | 2932142 | A1 | 25-06-2015 |
| | | | | CN | 105813744 | A | 27-07-2016 |
| | | | | CN | 111389451 | A | 10-07-2020 |
| | | | | EP | 3083049 | A1 | 26-10-2016 |
| | | | | JP | 6625537 | B2 | 08-01-2020 |
| | | | | JP | 2017501031 | A | 12-01-2017 |
| | | | | KR | 20160098401 | A | 18-08-2016 |
| | | | | RU | 2016129040 | A | 23-01-2018 |
| | | | | US | 2015165422 | A1 | 18-06-2015 |
| | | | | US | 2019262809 | A1 | 29-08-2019 |
| | | | | WO | 2015095056 | A1 | 25-06-2015 |
| | | | | ZA | 201604675 | B | 29-01-2020 |
| US 2019015781 | A1 | | 17-01-2019 | BR | 112018013775 | A2 | 11-12-2018 |
| | | | | CA | 3010558 | A1 | 13-07-2017 |
| | | | | CN | 108778501 | A | 09-11-2018 |
| | | | | EP | 3400103 | A1 | 14-11-2018 |
| | | | | JP | 2019511353 | A | 25-04-2019 |
| | | | | KR | 20180091953 | A | 16-08-2018 |
| | | | | RU | 2018128390 | A | 06-02-2020 |
| | | | | US | 2019015781 | A1 | 17-01-2019 |
| | | | | WO | 2017118932 | A1 | 13-07-2017 |
| US 2015273452 | A1 | | 01-10-2015 | CN | 106163641 | A | 23-11-2016 |
| | | | | CN | 112316973 | A | 05-02-2021 |
| | | | | DE | 102015105029 | A1 | 01-10-2015 |
| | | | | EP | 3126035 | A1 | 08-02-2017 |
| | | | | EP | 3593894 | A1 | 15-01-2020 |
| | | | | EP | 3597287 | A1 | 22-01-2020 |
| | | | | GB | 2524903 | A | 07-10-2015 |
| | | | | GB | 2536582 | A | 21-09-2016 |
| | | | | JP | 6767874 | B2 | 14-10-2020 |
| | | | | JP | 2017516643 | A | 22-06-2017 |
| | | | | KR | 20160140878 | A | 07-12-2016 |
| | | | | US | 2015273452 | A1 | 01-10-2015 |
| | | | | WO | 2015150805 | A1 | 08-10-2015 |

EPO FORM P0459

For more details about this annex : see Official Journal of the European Patent Office, No. 12/82

# EP 4 201 517 A1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2004024864 W
- US 2006043574 W
- US 2007086095 W
- US 2016024889 W
- US 2011061681 W
- WO IB2011051526 A
- US 2013065498 W
- EP 2019069878 W
- EP 2019079081 W
- US 2016019842 W

### Non-patent literature cited in the description

- Atlas of Zeolite Framework Types. Elsevier, 2001
- **HECK, RONALD ; FARRAUTO, ROBERT.** Catalytic Air Pollution Control. Wiley-Interscience, 2002, 18-19